# EUROPEAN PATENT APPLICATION

(11) **EP 4 321 064 A1**
(43) Date of publication of application: **14.02.2024**
(21) Application number: 22718827.3
(22) Date of filing: 29.03.2022
(51) Int. Cl.: A47J 31/36

(54) **SYSTEMS AND PROCESSES INCLUDING ENHANCED OPERATION OF CARTRIDGES OF SINGLE PORTIONS**

(30) Priority: 09.04.2021 PT 2021117171
(71) Applicant: Novadelta - Comércio e Indústria de Cafés, Unipessoal Lda, 1950-041 Lisboa (PT)
(72) Inventor: NABEIRO, Rui Miguel, 7370-112 Campo Maior (PT); DE FIGUEIREDO BRANCO, João André, 1885-091 MOSCAVIDE (PT); DA SILVA FERROLHO MENDES, Tiago Rafael, 1300-001 LISBOA (PT); FIGUEIRA BARROS DOS REIS, Claudia, 1495-130 LISBOA (PT)
(74) Representative: Ferreira Pinto, Francisca
(86) International application number: PCT/PT2022/050014
(87) International publication number: WO 2022/216167

(57) **Abstract**

The present invention refers to systems of distribution and preparation of edible products, that include cartridges (1, 1') adapted for collection of single portions (2) of edible substances devoid of single packages, and apparatus (10) for preparation of edible products, such as aromatic beverages, for example espresso type coffee, adapted for operating single portions (2) in product preparation devices (12), for example extraction devices, whereby these systems present retention means (7) and, optionally, a respective connection disposition (8), adapted so that provide a simpler and more reliable regulation of delivery of single portions (2) one-by-one to said product preparation device (12), as well as present a simpler construction and provider enhanced ergonomics.

The present invention further refers to processes of operation of systems of the type of the present invention.

## Description

### Field of the invention

The present invention refers to the field of systems and processes of distribution and preparation of edible products, such as for example espresso coffee and other coffee-based beverages, in particular including the operation of cartridges for collection of single portions and/or operation of said single portions of edible substance, such as for example roast and ground coffee beans.

### Background of the invention

The distribution of coffee beans to consumption locations where beverage preparation apparatus are operated based upon single portions, for example of roast and ground coffee beans, is known. It is further known the possibility of operating this type of apparatuses based upon cartridges comprising a plurality of single portions.

In particular there are known beverage preparation systems whereby said cartridges can be associated with the apparatus and so that can be operated by discharge dispositions that can regulate the supply of single portions, In general, said cartridges include a plurality of single portions arranged in an adjacent spatial relation relative to each other, for example in a stack. The single portions comprise a quantity of edible substance and a respective individual package, including in a gas-barrier material, for example in the form of a metallic capsule, or in a filter-like material, for example in the form of a paper pod. Typically the single portions are therefore operated by means of interacting with a respective package.

The document EP 1002490 A1 discloses a beverage preparation apparatus that presents a cartridge adapted so that can collect a plurality of single portions and supply these successively to a discharge disposition that provides functional connection between the cartridge and a beverage preparation device.

The documents EP 104366 B1, EP 1247481 B1, EP 1295553 A1, EP 1962654 B1, EP 2139369 B1 and EP 2958467 B1 also disclose beverage preparation systems including cartridges that can collect a plurality of single portions and be operated by discharge dispositions of beverage preparation apparatuses.

The prior art also includes solutions of cartridges configured as dispensers of single portions, so that a user can thereafter supply these by to a beverage preparation apparatus. The documents EP 1744650 B1, EP 1949833 A1 and WO 2014/135677 A1 disclose solutions of this type. In this case, cartridges can be manually removed and loaded with single portions for posterior delivery to user.

### General description of the invention

A first objective of the present invention is to provide systems for distribution and preparation of edible products, in particular aromatic beverages, that comprises single portions of edible substance, such as for example roast and ground coffee beans, and apparatus adapted for preparation of an edible product, such as for example a beverage by means of coffee extraction, such system presenting less operating costs and less use of materials, in particular packaging materials, as well as greater construction simplicity and operative reliability.

This objective is solved according to the present invention by means of a system according to claim 1.

In particular, this objective is solved by means of systems whereby single portions devoid of single packages can be disposed retained in alignments upstream of a discharge disposition of the apparatus, and successively delivery one-by-one to a product preparation device by means of regulating the contact of retention means with edible substance of the furthest downstream single portion, and by action of the gravity force, and by means of regulating the opening of the product preparation device, preferentially by mechanical means and automatically.

The systems can comprise a cartridge including a package that confines a plurality of single portions that consist on a given quantity of aromatic edible substance, optionally further other substances derived from at least one of: a vegetal substance, an edible vegetal substance, an aromatic edible vegetal substance.

In particular, the objective is solved by means of a system that comprises a cartridge with an alignment of single portions devoid of a single envelop or package, and further comprises an apparatus for preparing edible products with a discharge disposition adapted so that can operate the delivery of single portions to a product preparation device, for example an extraction device whereby a pressurized flow is made circulate through the single portion.

The single portions can consist of an aromatic edible substance and an edible coating including compounds derived from at least one of: a vegetal substance, an edible vegetal substance, an aromatic edible vegetal substance, the aromatic edible vegetal substance of the single portions.

The single portions are advantageously devoid of an envelope presenting a shape and/or volume different from the shape or volume occupied by the compacted tablet, or in a material different from the edible substance, so that the edible substance provides at least part, preferentially at least most part, particularly preferentially the totality of its exterior surface.

O cartucho pode ser adaptado de modo que pode recolher a pluralidade de porções individuals num volume continue e sob condições de barreira a gases relativamente ao exterior, de um modo preferido sob condições de atmosfera de gás inerte e/ou em sobrepressão, de um modo particularmente preferido também de proteção de UVs, de modo a preservar as propriedades organoléticas do mesmo no tempo.

The cartridge can be provided only by substances derived from at least one of: a vegetal substance, an edible vegetal substance, an aromatic edible vegetal substance, the aromatic edible substance of the single portions, and be devoid of materials of vegetal origin.

At least part of the package can be provided by substances derived from at least one of: a vegetal substance, an edible vegetal substance, an aromatic edible vegetal substance, the aromatic edible vegetal substance of the single portions.

The package can be devoid of materials of non-vegetal origin and be adapted so as to provide at least one of: barrier to gases and barrier to liquids.

The single portion can be in the form of a previously compacted granulate of aromatic edible substance individual.

The aromatic edible substance can be an aromatic edible substance for preparing beverages, such as for example coffee, tea, chocolate or similar.

The aromatic edible substance can be a granulate of previously roast and ground coffee beans.

The single portion can be in the form of a compacted tablet of roast and ground coffee beans, or of soluble coffee powder, presenting a weight comprised between 4 g and 16 g, preferentially between 4 g and 12 g, particularly preferentially between 5 g and 9 g.

The compacted table can present a single central symmetry axis, and a rotation symmetric shape when seen in top view, relative to the central symmetry axis.

The compacted table can present a cross section of circular shape only seen from the top or from the bottom.

The compacted table can present a general shape of disc type, ring type or similar.

The compacted table can present a portion of side wall, when seen in side view, that extends along a direction generally parallel to the direction of the central symmetry axis of the single portion, preferentially between at least most part of the extension between top and base surfaces.

The compacted table can present different top and base surfaces, whereby it is advantageous when the top surface is configured so as to be impinged by an upstream flow, and the base surface is configured so that can provide flow downstream of the tablet.

The compacted table can present a upstream-oriented cavity different from a downstream-oriented cavity, so that the contact surface with pressurized flow is bigger than the surface of intersection with a reference transversal plane.

In particular, the system can include at least one type of cartridge adapted to deliver single portions devoid of at least one of: substances of non-vegetal origin, non-edible vegetal substances, non-aromatic edible vegetal substances, to at least one of: consumption location and product preparation apparatus.

The system can include at least two types of cartridges that differ in at least one of: material of the container part, inclusion of interior package or not, dimension and shape of the container part, dimension and shape of the closing part, colour of at least one of: container part and closing part.

Moreover, the system can include at least two types of apparatuses for preparing edible products that differ in at least one of: inclusion or not of cartridge, inclusion or not of cartridge retention disposition configured so that can collect at least part of the cartridge, including the closing part, or at least most part of the cartridge, number of cartridge retention dispositions.

Another objective is to provide a process of operation more efficient and more ergonomic of single portions and apparatuses for preparing edible products in systems of distribution and preparation of edible products of the type of the present invention.

The objective above is solved according to the present invention by means of a process according to claim 13.

In particular, the process can include successively supplying single portions one-by-one to a product preparation device, from a cartridge or from a collection part, so that the central symmetry axis of the single portions results in an alignment similar to the direction of injection of pressurized flow in the product preparation device, and directly impinging the single portions with a pressurized flow directed along a prevailing direction that is similar to the one of the respective central symmetry axis, whereby direct impinging of single portions does not include directly impinging a non-edible substance.

The process can include providing a system according to any of claims 1 to 12.

In particular, the process can include the retention in operative position of one of: a cartridge, a collection part and a support part of discharge disposition, operative position where the supply of single portions can be operated in articulation with the product preparation device.

The process can include the removal of an alignment of single portions from a cartridge and placement thereof in at least one of: a collection part and a support part of the discharge disposition.

In the context of the present application, the expression "package" means an item configured so as to jointly confine a plurality of single portions, including in a confinement adapted for at least one of: transport of single portions between a distribution location and consumption location, and discharge operation associated with an apparatus for preparing products, or associated with an apparatus for preparing a product, or being one of the components of said apparatus.

Examples of consumption locations include public consumption locations, such as for example cafés and restaurants, that include one or several apparatus for preparation of beverages, and private consumption locations that include, for example, only one beverage preparation apparatus.

In said consumption locations there is at least one beverage preparation apparatus based upon roast and ground coffee beans or substance derived therefrom, such as for example espresso coffee and e similar.

The apparatus for preparing a product can include flow supply means and a product preparation device, for example aromatic beverages, in particular an extraction device adapted so that can carry out cycles of extraction of single portions of roast and ground coffee beans.

The apparatus can be adapted so that can supply a processing fluid at a pressure of at least 2 bar, preferentially at least 8 bar, and at a temperature of at least 60°C, preferentially at least 80°C, to an extraction device that can collect single portions.

The apparatus can further comprise supply means of pressurized and heated fluid, in flow connection with said beverage preparation device.

Examples of this type of beverage preparation apparatuses, for example including automatic machines for preparing espresso type coffee and similar beverages, are abundantly known in prior art such that one abdicates from a more detailed description thereof.

### Description of the Figures

The invention shall be hereinafter explained in greater detail based upon preferred embodiments and on the attached Figures.

The Figures show embodiments of the present invention in simplified schematic representations:
- Figure 1:: views of a single portion (2);
- Figure 2:: views of an alignment of single portions (2);
- Figure 3:: side cut and top views of a first preferred embodiment of cartridge (1);
- Figure 4:: side cut views of a second embodiment of cartridge (1'), including first and second package (3A, 3B);
- Figure 5:: first instant of a first embodiment of placement of a cartridge (1) in operative position on an apparatus (10);
- Figure 6:: second instant of a first embodiment of placement of a cartridge (1) in operative position on an apparatus (10);
- Figure 7:: first instant of a second embodiment of placement of a cartridge (1) in operative position on an apparatus (10);
- Figure 8:: second instant of a second embodiment of placement of a cartridge (1) in operative position on an apparatus (10);
- Figure 9:: second instant of a third embodiment of placement of a cartridge (1) in operative position on an apparatus (10);
- Figure 10:: second instant of a fourth embodiment of placement of a cartridge (1) in operative position on an apparatus (10);
- Figure 11:: flux diagram of a first embodiment of a process according to the invention;
- Figure 12:: flux diagram of a second embodiment of a process according to the invention;
- Figure 13:: flux diagram of embodiment of process according to the invention;
- Figure 14:: flux diagram of embodiment of process according to the invention;
- Figure 15:: front and side cut views of a first embodiment of retention means (7) of single portion (2);
- Figure 16:: front and side cut views of a second embodiment of retention means (7) of single portion (2);
- Figure 17:: first instant of operation of a first embodiment of a cartridge (1) on an apparatus (10) ;
- Figure 18:: second instant of operation of a first embodiment of a cartridge (1) on an apparatus (10) ;
- Figure 19:: first instant of operation of a second embodiment of a cartridge (1) on an apparatus (10) ;
- Figure 20:: second instant of operation of a second embodiment of a cartridge (1) on an apparatus (10) ;
- Figure 21:: flux diagram of an embodiment of delivery process of single portions (2);
- Figure 22:: flux diagram of an embodiment of delivery process of single portions (2);
- Figure 23:: first instant of operation of an embodiment of a cartridge (1) with a connection member (8) on an apparatus (10);
- Figure 24:: second instant of operation of an embodiment of a cartridge (1) with a connection member (8) on an apparatus (10);
- Figure 25:: third instant of operation of an embodiment of a cartridge (1) with a connection member (8) on an apparatus (10);
- Figure 26:: fourth instant of operation of an embodiment of a cartridge (1) with a connection member (8) on an apparatus (10).

### Description of preferred embodiments of the invention

The present invention shall be described based upon the case of systems for distribution and preparation of beverages, for example of espresso coffee type, for example of espresso coffee type, soluble coffee, tea or similar, without excluding other beverages.

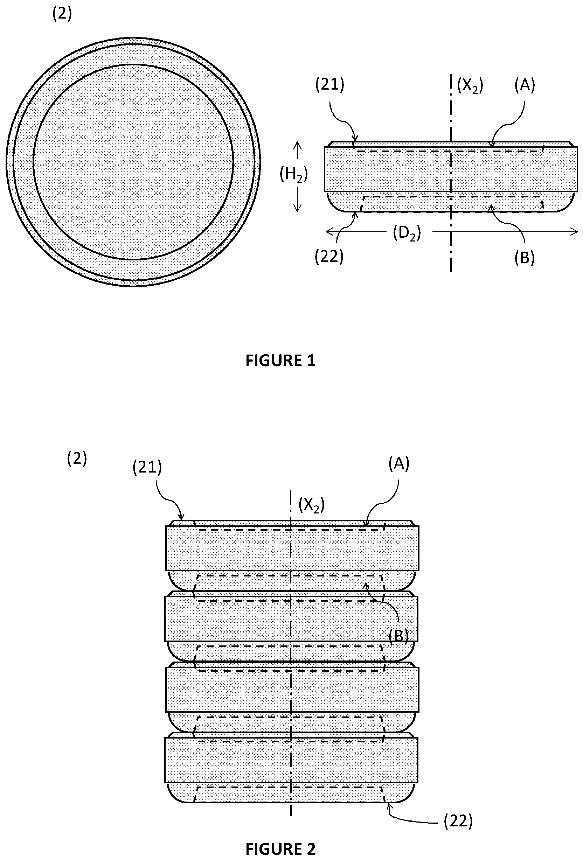

The cartridges (1) according to the present invention are adapted so that can collect and supply single portions (2) of an aromatic edible substance (see **Figures 1** and **2****)** devoid of a respective single package, whereby the gas barrier function can be provided by the package (3) that collects a previously defined set of a plurality of single portions (2).

The single portions (2) consist in a portion of edible substance, in particular in a compacted tablet of a granulate or powder of an aromatic edible substance, such as for example roast and ground coffee, so that maintains a volumetric shape.

Alternatively, the single portions (2) consist of a portion of aromatic edible substance and of an edible coating that includes compounds associated with an edible substance, preferentially also aromatic, and that can be adapted to provide at least partial barrier to liquids and/or to gases. It is preferred when the edible coating presents chemical affinities with the aromatic edible substance of the single portion, for example is obtained from coffee or from a coffee derivate.

The single portions (2) do not include, therefore, a package in a material with gas barrier property different or non-derived from a vegetal substance, including of metallic, synthetic, or non-biodegradable materials, such as for example aluminium capsule, container of synthetic material and similar.

The single portions (2) can present a shape with a height (H₂) and most part of the exterior surface on an upstream-oriented surface and on a downstream-oriented face, both mostly extending along a direction transversal to the direction of a single central symmetry axis (X₂), thereby providing a similar extension of crossing of pressurized flow along at least most part of its characteristic dimension (D₂), and separated by a smaller part of exterior surface on a lateral face, for example of disc, ring or similar type.

It has been demonstrated as particularly advantageous when the single portions (2) are configured so that the edible substance of adjacent single portions (2) can only be in direct contact by parts of respective surfaces, such as for example a part of ring shape of the top surface, or upstream-oriented, or base surface, or downstream-oriented.

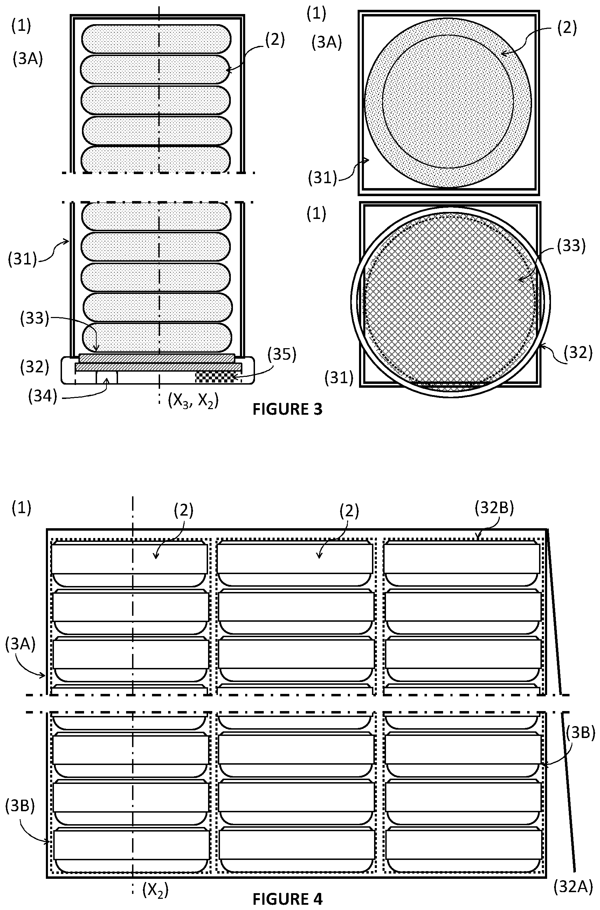

**Figures 3** and **4** represent preferred embodiments of cartridges (1, 1') that are part of a system according to the present invention.

The cartridge (1) can include a package (3) with a generally elongated and tubular shape along at least most part of its longitudinal extension, configured so as to contain at least a disposition of single portions (2) with central symmetry axis (X₂) aligned along a same direction, for example at least one stack of single portions (2).
According to one aspect, the package (3; 3A, 3B) presents a cross section with a shape different from the cross section of the single portions (2). In particular, at least a part of package (3), preferentially at least an exterior package (3A) presents a non-circular cross section.

According to another aspect, at least one part of the package (3; 3A, 3B), preferentially at least one of: an interior package (3B) and an exterior package (3A) can be provided in a material that includes compounds associated with or derived from a vegetal substance, further preferentially from an edible vegetal substance.

The package (3) can present a container part (31) configured so that can collect a plurality of single portions (2), and at least a closing part (32) associated with a top edge of the container part (31) so that can provide gas sealed closing thereof, and preferentially with a cross section similar to, in particular bigger by only a clearance, than a cross section of single portion (2).

Moreover, at least part of the package (3; 3A, 3B) can include a container part (31) that presents a characteristic dimension (D₃) comprised between 1,02 and 1,15 times, preferentially between 1,03 and 1,10 times the characteristic dimension (D₂) of the single portions (2).

According to another aspect of the present invention, a cartridge (1) comprises a package (3) adapted so that the cartridge (1) can be operated retained in functional connection and sealed to the ambient atmosphere, whereby the closing part (32) of package (3) can be adapted so that provides the functional connection and the gas sealing connection of the cartridge (1) in operative position.

The cartridge (1) can present a closing part (32) configured so that can provide retention, recognition and sealing of a cartridge (1) in operative position, that is, when functionally connected with the discharge disposition (11) of an apparatus (10) for preparing edible products.

The closing part (32) can present a cross section with at least one of: a different characteristic dimension and a different shape from the cross section of the container part (31) .

The closing part (32) can present a cross section with a circular, oval, quadratic, prismatic shape.

At least the container part (31), preferentially also the closing part (32), can be provided in a recyclable material, preferentially in a compostable material presenting gas barrier properties.

The system can include at least one of:
- a first type of cartridge (1) adapted so that can be operatively retained in a discharge disposition (11) of apparatus (10), and
- a second type of cartridge (1') adapted so that can supply a first type of cartridge (1) that can be part of a second type of apparatus (10'), optionally adapted so that can operatively retained in a discharge disposition (11) of apparatus (10').

The system can include at least one type of cartridge (1, 1') adapted so that can be retained in the product preparation apparatus (10), optionally so that is part thereof, or can be at least partially associated with or form fitter in a discharge disposition (11) of the apparatus (10), so that feed a product preparation device (12).
The system can include at least one type of apparatus (10, 10') presenting a discharge disposition (11) configured so that can collect one alignment of single portions (2) in gas sealed manner, and so that can supply the latter to a product preparation device (12) through a conduction disposition (13) that is preferentially devoid of actuation mechanisms.

The cartridge (1) represented in **Figure 3** includes only one exterior package (3A) that includes a container part (31) preferentially provided in a gas barrier material and that confines a stack of single portions (2), preferentially at least 15, or at least 20, and at most 50, or at most 40, together with a closing part (32).

It is preferred when the container part (31) and the closing part (32) confine a discharge passageway centred with the central symmetry axis (X₃) of the container part (31), and configured so that provides passageways of single portions (2) only when oriented in the position of the respective central symmetry axis (X₂) in which they are collected inside the container part (31).

As can be observed, the container part (31) presents a shape of cross section, squared in the case of **Figure 3****,** that is different from the shape of cross section of the single portions (2), circular in both cases.

The package (3) is preferentially configured so that can collect at least one alignment of single portions (2) in a previously defined of spatial relationship to each other, and so that can collect at least 15, preferentially at least 20, particularly preferentially at least 30 single portions (2).

The closing part (32) can present a shape of cross section of the discharge passageway similar to that of the single portions (2) and a wall thickness bigger than that of the container part (31).

It is preferred when in the case of two packages (3) disposed side-by-side, only in respective closing parts (32) can be in direct contact.

In the case of the represented embodiment, the closing part (32) is configured so that can retain closing means (33) of the discharge passageway, in the form of a lid that extends along at least part of the longitudinal extension of the closing part (32) and that can be retained by pressured-fitting in a perimeter region of the closing part (32).

Moreover, the closing part (32) can present at least one of: closing means (33), retention means (34) and data means (35) .

The closing part (32) can further present retention means (34), preferentially disposed in an interior lateral face **(****Figure 3****)** or exterior thereof, adapted so that can provide removable engagement in the discharge disposition (11) of a product preparation apparatus (10).

The closing part (32) can further present data means (35), for example in the form of symbols or a code, advantageously disposed on an exterior lateral face **(****Figure 3****)** of the closing part (32), in particular so that can only be apprehended when in an angular position associated with the operative position of the cartridge (1) in a discharge disposition (11). The data means (35) are advantageously adapted so that can be automatically apprehended by data apprehension means (14) operable in functional connection with control means (15) of the apparatus (10).

The cartridge (1') represented in **Figure 4** comprises an exterior package (3A) and an interior package (3B).

The exterior package (3) can be provided in a material that does not ensure gas barrier but barrier to UVs, for example in cardboard, and the interior package (3B) can be provided in a material that ensures gas barrier, and preferentially biodegradable.

In particular, it is preferred when the interior package (3B) is provided in a material that comprises compounds of vegetal substances, or obtained from at least one of: vegetal substance, edible vegetal substance, and aromatic edible vegetal substance, in particular corresponding to the single portion (2) .

According to a particular aspect, the package (3) and the single portions (2) consist in materials that comprise compounds of vegetal substances, or obtained from at least one of: vegetal substance, edible vegetal substance, and aromatic edible vegetal substance, in particular corresponding to the single portion (2) .

The interior package (3B) can be provided in a flexible material, non self-supporting, and presenting a container part (31) and a closing part (32) of easy manual opening, for example disposed in a top region and for example of the type closure by welding and weakened rupture zone for preferential opening.

The cartridge (1) can present a prismatic shape adapted so that can collect a single interior package (3B), or a parallelepiped shape adapted so that can collect a plurality of interior packages (3B), such as in the case of **Figure 4****.**

The shape and dimension of the closing parts (32A, 32B), as well as the exit direction of the single portions (2) and position thereof relative to the central symmetry axis (X₂) of the single portions (2), can be different in the case of the closing parts (32A, 32B) of the exterior and interior packages (3A, 3B).

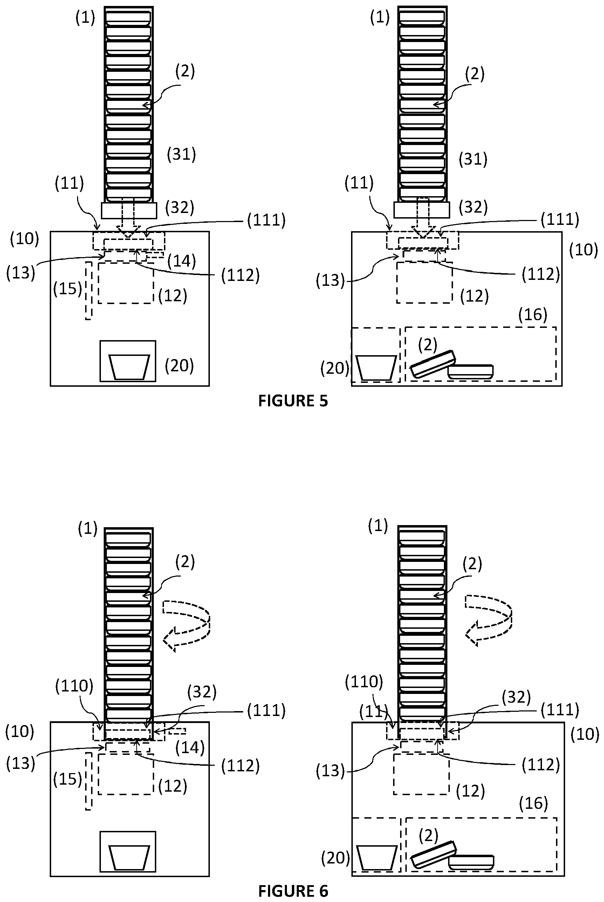

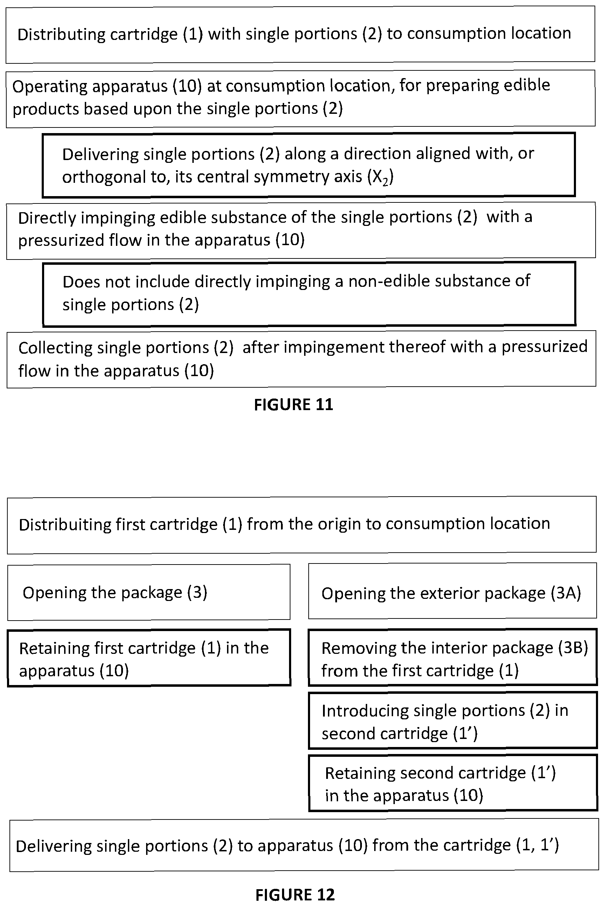

**Figures 5** to **10** represent preferred embodiments of systems of distribution and preparation of edible products according to the present invention that can also be interpreted based upon the embodiments of operation processes represented in **Figures 11** and **12****.**

In general, the cartridge (1) can be configured as at least one of: a package adapted for transport of single portions (2) to a consumption location, and a container adapted to operate associated with, or as part of an apparatus (10). That is, the package (3) can be package in the sense that can serve only for transport between locations or uses, and/or can be a container in the sense that can be used to operate apparatuses.
The package (3) can be adapted so that the cartridge (1) can be operated according to at least one of:
- retained in removable manner by a region of the package (3), preferentially by the closing part (32), with a transversal dimension at least approximately similar to and neighbouring to the transversal dimension of the discharge passageway for single portions (2), and in gas sealed manner relative to the ambient atmosphere;
- retained in a collection part (110) of the discharge disposition (11) configured as a recess or cavity relative to the exterior surface or casing of apparatus (10) ;
- retained on a support part (111) of discharge disposition (11) configured as a space at least partially confined, preferentially at least mostly confined inside the product preparation apparatus (10).

In the case of a first embodiment, represented in **Figures 5** and 6 and corresponding to a process represented in **Figure 11****,** a cartridge (1) is delivered to a consumption location and can be operatively retained in a discharge disposition (11) of an apparatus (10), so that the single portions (2) can be supplied to a product preparation device (12) along a single vertical direction aligned with its central symmetry axis (X₂).

The retention of cartridge (1) is advantageously carried out by retention means (34) associated with the closing part (32) and that can include shape retention by means of pressurized fitting, and retention by engagement, for example of the bayonet type, screw or similar.

The regulation of discharge of the single portions (2) can be carried out by discharge means associated with a conduction disposition (13) and regulated by control means (15) configured so that can regulate the operation of the apparatus (10).

The apparatus (10) can include data apprehension means (14) adapted so that can apprehend data means (35) associated with the closing part (32) of the cartridge (1) when the latter is in a correct operative position. In this case, the data means (35) can be provided in a lateral wall of the closing portion (32) and the data apprehension means in an angular position of an interior lateral wall of the discharge disposition (11) corresponding to said operative retention position.

A residues collection disposition (16) only collects edible substances, in particular aromatic edible substances and water or other edible fluid.

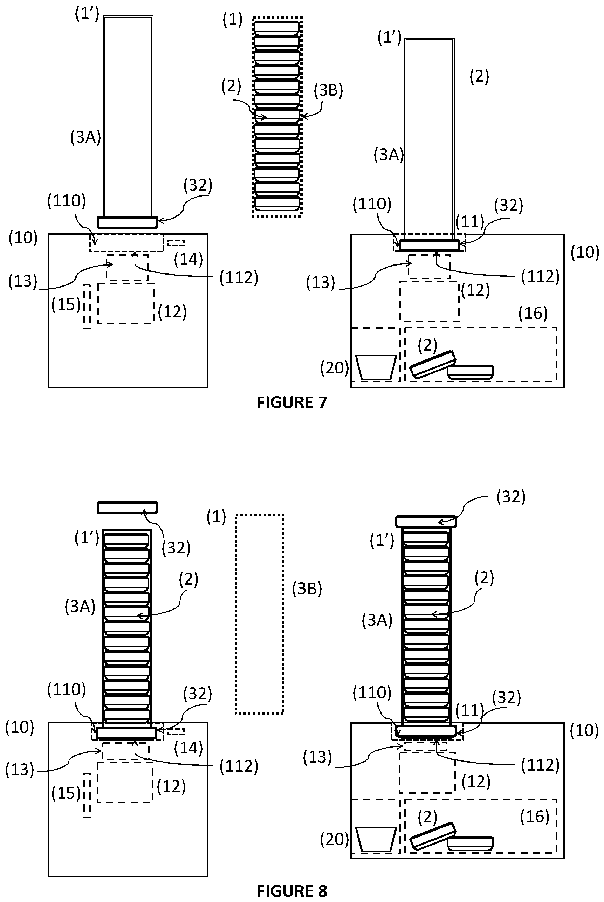

In the case of the embodiments of **Figures 7** and **8****,** the system includes a first type of cartridge (1) adapted so that can be transported to a consumption location, whereby its exterior package (3A) can be opened so as to remove an interior package (3B) that confined a plurality of single portions (2) with gas barrier. The process of operation can basically follow the way represented on the right-hand side of the flow diagram of **Figure 12****.**

The interior package (3B) can be opened and the single portions (2) can be supplied to a second type of cartridge (1') adapted so that can be operatively retained on the discharge disposition (11) of an apparatus (10).

The second type of cartridge (1') can be provided as being a part of apparatus (10), in particular a part adapted so that can be retained in removable manner in operative position in a discharge disposition (11).

The second type of cartridge (1') can be adapted so that can be removed from the discharge disposition (11) for simplicity of loading of the single portions (2), as represented in **Figure 7****,** or so that can be removed only a portion of package (3), for example a closing part (32) disposed in the top region thereof, as represented in **Figure 8****.**

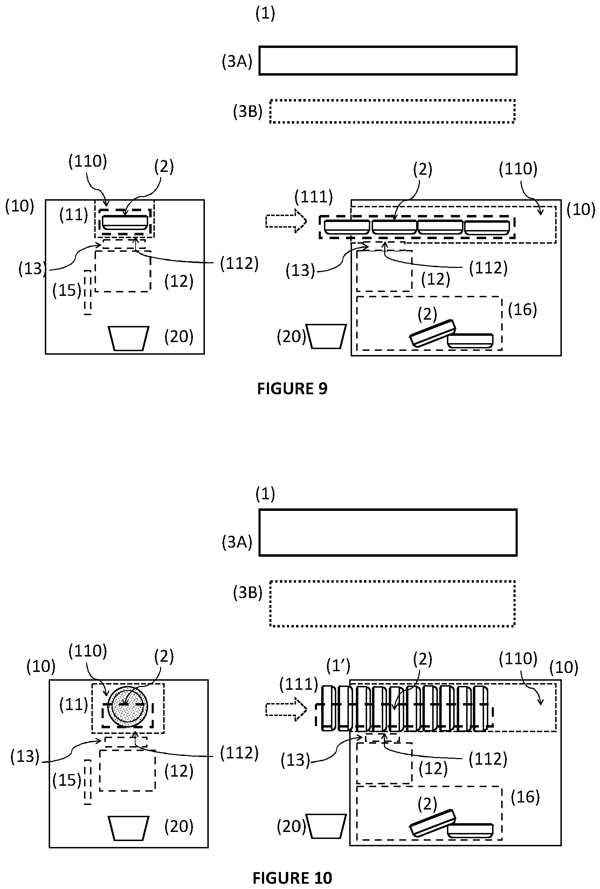

Alternatively, the system can include only one type of package (1) with an exterior package (3) and an interior package (3B), and the apparatus (10) can present a discharge disposition (11) configured as a collection cavity (110) adapted so that can collect a plurality of single portions (2), eventually further presenting a retention support (111), preferentially provided movable between open and closed positions, adapted so that can provide placement of single portions (2), as represented in **Figures 9** and **10** that represent a drawer-like arrangement of the discharge disposition (11).

Alternatively, a cartridge (1) can supply single portions (2) along a direction orthogonal to the symmetry central axis (X₂), as in the case of **Figure 10****.**
The single portions (2) are supplied, preferentially only by action of the gravity force, to a product preparation device (12) where they are impinged by a pressurized fluid flow. For example, water at a temperature between 80 and 98 °C, and a pressure above 2 bar, preferentially above 8 bar.

In particular, the pressurized flow does not directly impinge other substance inside the product preparation device (12) than the edible substance associated with the single portion (2). That is, first impinges upon a portion of the edible substance of the edible substance, and not other substances.

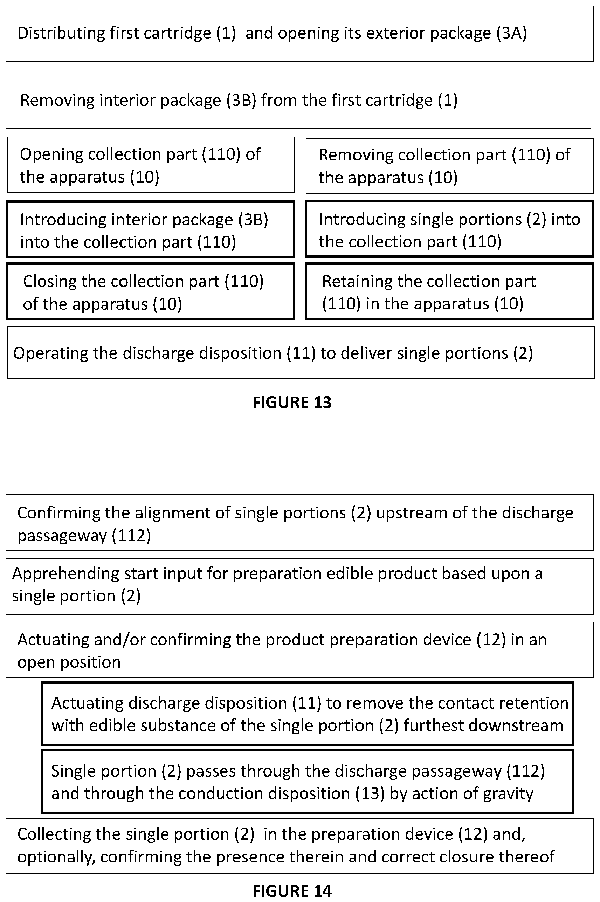

Thus, as described above and as represented in **Figure 13****,** a process according to the invention can include the distribution of a second type of cartridge (1') to a consumption location (C) and the removal of an interior (3B) that includes an alignment of single portions (2), for example a respective central symmetry axis (X₂), with edible substance of one adjacent to edible substance of another, and so that at least the exterior package (3A) can be reused.

Said interior package (3B), or the single portions (2) devoid of interior package (3B), can be placed inside of a collection part (110).

As represented in **Figure 14****,** the process can further include the confirmation, preferentially by automatic means, of the presence of at least one single portion (2) upstream of the discharge passageway (112). After a start input of the cycle of preparation of edible product, there can be further confirmed whether the product preparation device (12) is in the open position, and/or is being actuated towards the latter if that is not the case. In this case, there can be actuated the removal of retention by means of direct contact with edible substance of the furthest downstream single portion (2), that is, directly upstream of the discharge passageway (112), so that the latter can fall, passing through the conduction disposition (13) so that can be collected in the product preparation device (12). This can now be closed ant the fluid circulation there through can be initiated so as to obtain the edible product.

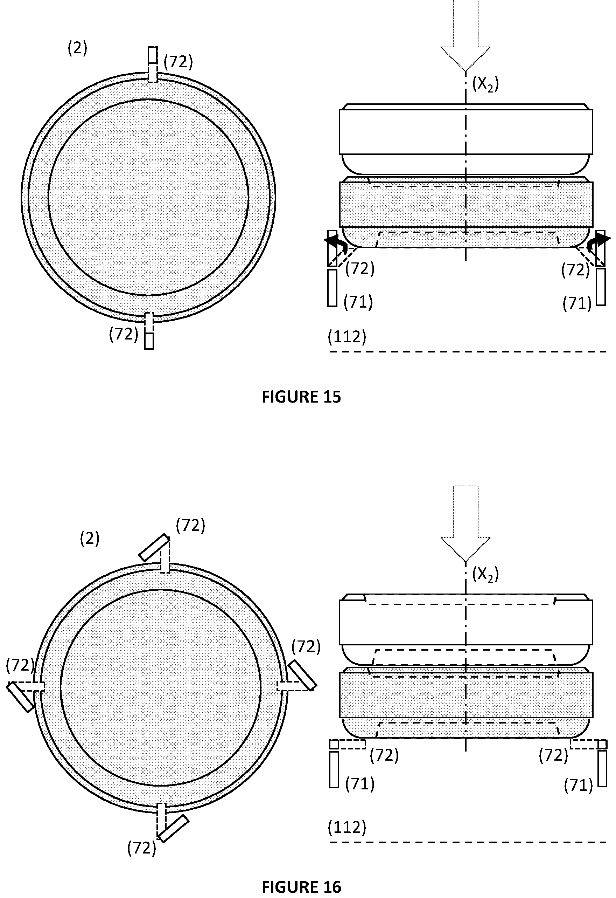

According to one aspect, represented in **Figures 15** and **16****,** the system can present retention means (7; 71, 72) adapted so that can be operated in articulation with the operation of the product preparation device (12), in particular by the control means (15) associated with the apparatus (10), whereby it is preferred when the actuation of both is provided by respective mechanical means, for example by means of an actuation device of the type electrical motor, and automatically, for example based upon external and internal inputs from the apparatus (10).

In particular, the retention means (7) comprise a retention part (72) adapted so that can be moved between a position of retention where it retains the single portion (2) against the gravity force, and a position of non-retention where it enables the passage thereof downstream, towards the discharge passageway (112). The retention part (72) advantageously includes a plurality of members, preferentially at least two and at most four, distributed in symmetric manner along a surrounding alignment and configured so that only touch a perimeter portion of the single portion (2) or neighbouring thereto.

As represented, the retention means (7; 71, 72) are adapted so that can be operated between a retention position (dashed line) where they are in contact with edible substance of the single portion (2), in particular only with a perimeter region thereof, and a non-retention position (full line).

The retention means (7) can further comprise an actuation part (71) configured so that can actuate the retention part (72) between the retention and non-retention positions. It is advantageous when the retention part (72) is configured so that can engage in a particular portion of the single portion (2), in particular on a portion of the downstream-oriented surface thereof.

According to a preferred embodiment, the retention part (72) can further comprise elastic members so that the retention members can further be impinged by an elastic force, for example by means of a spring-like element, so that the retention part (72) returns to the retention position elastically driven, as soon as the actuation part (71) ceases impinging it.

The actuation part (71) can be configured so that only carries out a translation movement, and is adapted so that thereby transmits a movement in a direction parallel (Figure 15) or orthogonal **(****Figure 16****)** relative to a central axis, for example to the central symmetry axis (X₂) of the single portion (2) .

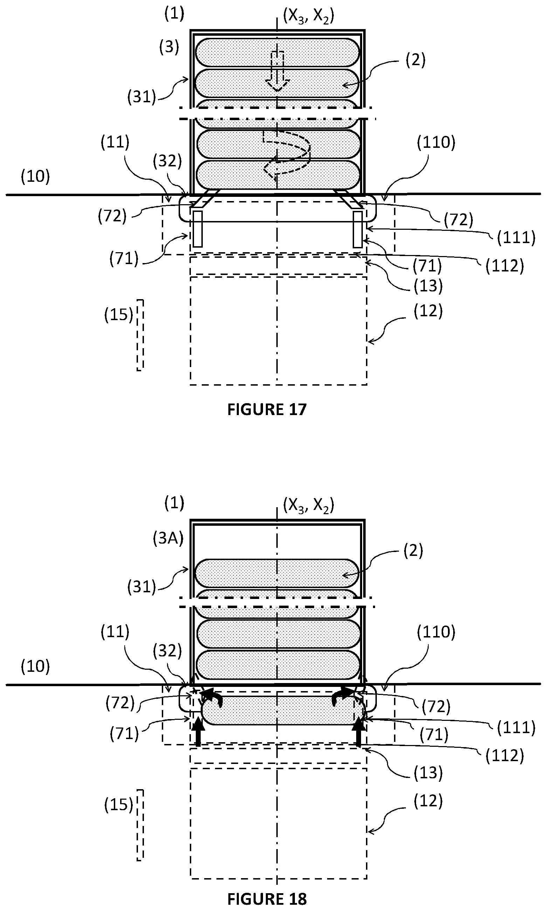

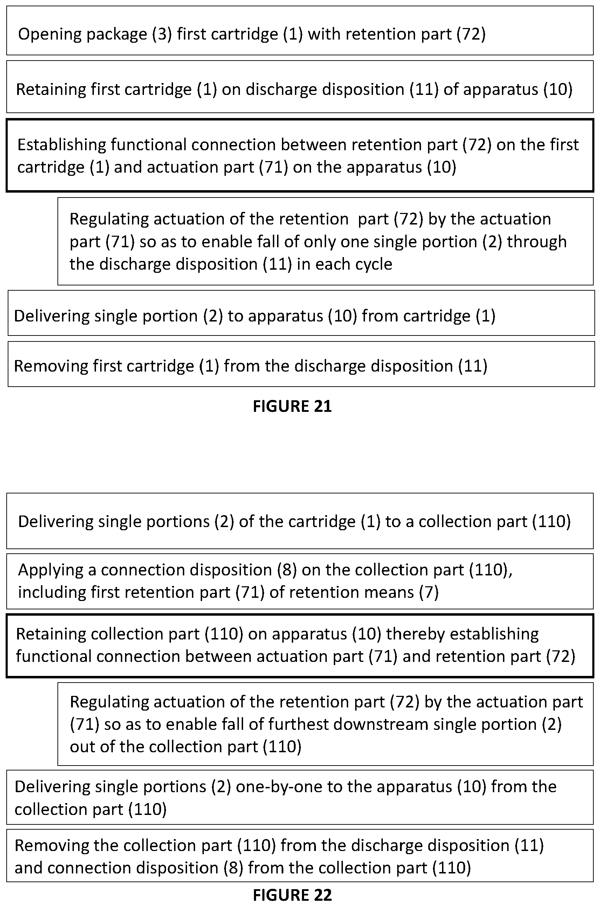

**Figures 17** to **20** represent successive moments of a process of operation of a system similar to the one represented in **Figures 5** and **6****,** and with retention means (7) similar to the **Figure 15****,** and also generally represented by the diagram of **Figure 21****.**

The system comprises in this case a cartridge (1) that includes a package (3) confining an alignment, in this case a stack, of single portions (2). The package (3) presents a retention part (72) associated with a closing part (32) that confines an exit passageway of the package (3), and configured so that retains the alignment of single portions (2) upstream thereof.

A user can remove closing means (33) that initially close the exit passageway of package (3), and handle the cartridge (1) so as to retain it in operative position on a discharge passageway (11) of apparatus (10), for example by means of a gesture along the vertical direction followed by a rotation movement around said vertical direction as represented in **Figure 17****.**

The discharge disposition (11) comprises the actuation part (71) of the retention means (7), whereby the cartridge (1) and the apparatus (10) are adapted so that the retention part (72) only can be provided in functional connection with a respective actuation part (71) when the cartridge (1) is in operative retention position on the discharge disposition (11).

In case of start of a cycle of product preparation, for example following an external input by a user, the control means (15) of the apparatus (10) can command the actuation of the retention part (72) by the actuation part (71), so that the retention part (72) is actuated in a swivelling movement upwards and thereby release passage of the single portion (2) furthest downstream, that can then fall under the action of the gravity force through the exit passageway of the package (3) and the discharge passageway (112) of the discharge disposition (11), and thereinafter reach the product preparation device (12), as represented in **Figure 18****.**

According to one aspect, the retention means (7) and the single portions (2) are adapted so that the exerted retention force, balance of acting forces and course of movement between retention and non-retention positions, corresponds to the extension of displacement of only one single portion (2) through the retention part (72). In this case in particular, the displacement at least approximately corresponds to the height (H2) of the single portion (2). It is in this case advantageous when the perimeter regions of the single portion (2), at least in the upstream-oriented face, are configured inclined relative to the prevailing displacement direction.

According to an aspect of the present invention, the system can comprise discharge means (7) operable so that can interact directly with edible substance of the single portions (2) in a space that is sealed at least to liquid, preferentially also to gases, relative to the exterior of the apparatus (10).

According to another aspect, the system can comprise discharge means (7) adapted so that can retain the single portions (2) so as to counter its weight, according to at least one of:
- in a perimeter region of the base face (22) of the single portions (2);
- in a lateral region of the single portions (2);
- in a region that corresponds to less than 80%, preferentially less than 60%, particularly preferentially less than 40%, of the surface of the base face (22) of the single portions (2);
- in a region that corresponds to less than 80%, preferentially less than 60%, particularly preferentially less than 40%, of the lateral surface of the single portions (2).

According to a particularly advantageous aspect, the system can comprising discharge means (7; 71, 72) that include an actuation part (71), preferentially including a plurality of actuation members, adapted so that can be actuated by a device of mechanical type, electro mechanical type or similar, and a retention part (72) that can be actuated by an actuation part (71) along a first direction, and by elastic means and the gravity force along a second direction opposite to the first.

Moreover, the system can comprise discharge means (7) whereby at least the retention part (72) is associated with at least one of:
- a first type of cartridge (1), preferentially reusable, adapted so that can distribute single portions (2) to a consumption location, optionally also so that can be retained in operative position on the discharge disposition (11) ;
- a second type of cartridge (1') adapted so that can be part of the apparatus (10), can be retained in operative position on the discharge disposition (11), and that can be reloaded with single portions (2) from a first type of cartridge (1).

According to another aspect of the present invention, the system can comprise at least one of: discharge means (7) and connection disposition (8) configured so that can be univocally associated with one beverage preparation apparatus (10), whereby it is preferred when its operation can be regulated by at least one of: data means (5) associated with a beverage preparation apparatus at the consumption location (A) and remote data means (20) .

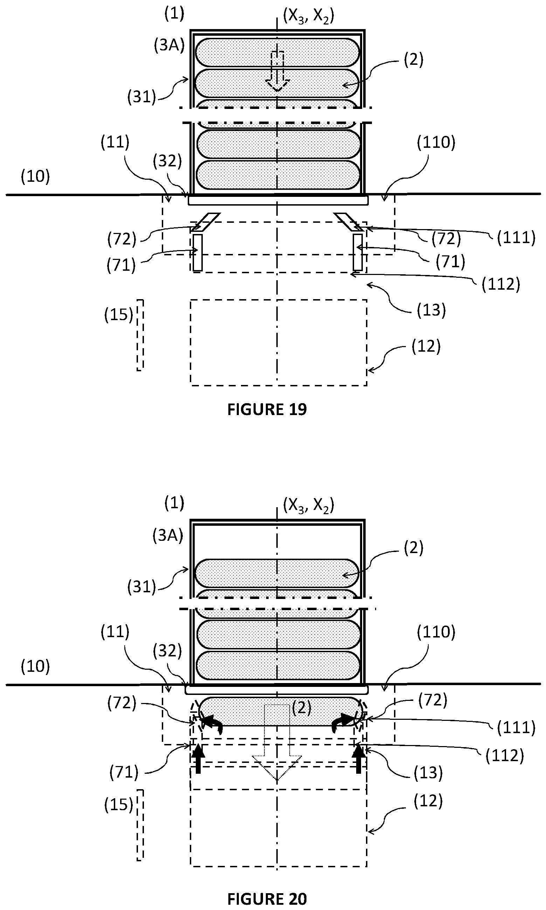

**Figures 19** and **20** represent similar instants, but in this case the retention (72) and actuation parts (71) are provided in the discharge disposition (11).

In the case of this embodiment, the package (3) of the cartridge (1) can present a closing part (32) with closing means (33) configured so that can be removed or at least partially perforated by the retention part (72), once upon correct placement of the cartridge (1) on the discharge disposition (11), so that the furthest downstream single portion (2) results simultaneously retained by the retention part (72) when the cartridge (1) is retained in operative position on the discharge disposition (11).

Alternatively, in the case of embodiments as those represented in **Figures 7** to **10****,** whereby at least one alignment of single portions (2) can be collected in a collection part (110) and/or support part (111), the retention means (7; 71, 72) could be associated with a collection part (110) and/or support part (111). Further principles and aspects of configuration and operation of the retention means (7; 71, 72) being similar, it is herewith abdicated from a description and representation thereof.

According to another aspect, the retention means (7) can be at least partially associated with a connection disposition (8) adapted so that can be retained in a cartridge (1) and in the discharge disposition (11 of an apparatus (10), and thereby provide passage of single portions (2), including at least retention of a respective alignment of single portions (2) by a retention part (72) operable upstream of the discharge passageway (112).

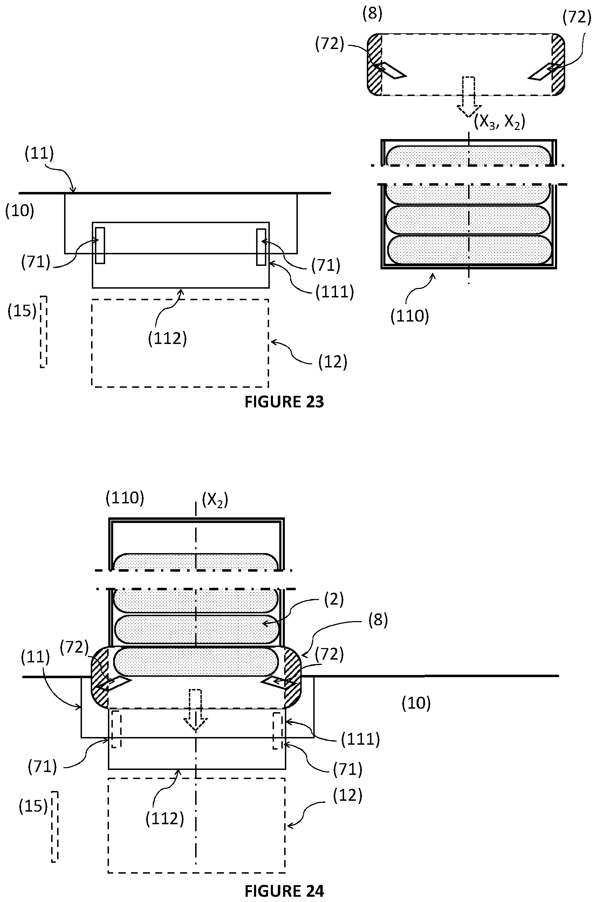

**Figures 23** to **26** represent successive instants of a process of operation according to the invention, also represented in **Figure 22****,** whereby in this case the single portions (2) are first removed by the user from a cartridge (1) e and then disposed along a previously defined alignment in a collection part (110) associated with the discharge disposition (11) of apparatus (10).

The collection part (110) is in this case configured in form of container that can collect a stack of single portions (2) and can be retained in operative position on a support part (111) of the discharge disposition (11).

The process according to the invention can include the steps:
- disposing a plurality of alignments of single portions (2) coerced towards the discharge passageway (112) of respective discharge dispositions (11) disposed in relative proximity to each other,
- operating each one of said alignments of single portions (2) by means of:
- apprehending an input associated with said alignment or with respective discharge disposition (11);
- actuating the discharge disposition (11) of said alignment, in particular so as to remove the retention of the furthest downstream single portion (2), so as to supply the latter to a product preparation device (12);
- apprehending an input associated with the conclusion of the product preparation cycle;
- optionally, preventing the operation of another alignment of single portions (2) or of respective discharge disposition (11), before apprehending an input associated with the conclusion of the product preparation cycle.

In the case of a preferred embodiment of the process, the operation of the single portions (2) in the apparatus (10) can further include at least one of the following steps:
- disposing the single portions (2) in a similar alignment, preferentially including of respective central symmetry axis (X₂), relative to the discharge disposition (11);
- optionally, detecting the presence and/or correct disposition of the alignment of single portions (2) relative to the discharge disposition (11);
- actuating the discharge disposition (11) of said alignment, in particular so as to remove the retention of the furthest downstream single portion (2) therein, so as to supply the latter to a product preparation device (12) ;
- delivering the single portions (2) to the product preparation device (12) only by the action of the gravity force, at least downstream of the discharge disposition (11) ,
- directly imping the single portion (2) with a pressurized flow, so that the pressurized flow only interacts with edible substance inside the volume confined by the closed product preparation device (12),
- discharging edible product from the closed product preparation device (12);
- optionally, operating the opening the product preparation device (12);
- discharging operation residues downstream thereof, whereby the residues do not include non-biodegradable materials.

According to a particular aspect, it is advantageous that the single portions (2) carry out a generally vertical course inside the apparatus (10), without transversal displacement to the vertical direction, preferentially driven only by the action of the gravity force.

The process according to the invention can further include the following steps:
- delivering a first type of cartridge (1) to a consumption location;
- removing closing means (33) of the package (3), in particular from a closing part (32), preferentially with the package (3) oriented generally upwards;
- optionally, retaining a connection disposition (8) including retention part (72) on the package (3), in particular on the closing part (32), so that the package (3) can be handled with the closing part (32) oriented downwards without a single portion (2) falling out;
- retaining the connection disposition (8) together with the package (3) in operative position on the discharge disposition (11), in particular so that the exit passageway of the package (3) of cartridge (1) is aligned upstream with the discharge passageway (112) of a discharge disposition (11) and that the retention part (72) can be actuated by an actuation part (71) associated with the discharge disposition (11).

According to an advantageous embodiment, the process can include the following steps:
- supplying a second type of cartridge (1') to a consumption location;
- removing a plurality of single portions (2) from the second type of cartridge (1') and disposing these inside a collection part (110) of the discharge disposition (11), so that result in operative position of retention relative to the discharge passageway (112) of the discharge disposition (11),
- optionally, retaining a connection disposition (8) including retention part (72) on the collection part (110), so that can be handled with the opening oriented downwards without a single portion (2) falling out;
- retaining the connection disposition (8) together with the collection part (110) in operative position on the discharge disposition (11), so that the retention part (72) can be operated by the actuation part (71).

Moreover, according to another embodiment, the process can still include the steps:
- detecting the presence and/or a correct retention position of cartridge (1) on the discharge disposition (11) ;
- automatically apprehending at least one of: a first set of data associated with an operative position of the cartridge (1) and a second set of data associated with the cartridge (1), whereby the apprehension data are transmitted to control means (15) associated with the apparatus (10);
- apprehending external input relating to the cartridge (1) and/or to the discharge disposition (11) to operate in a product preparation cycle;
- operating the retention means (7; 71, 72) and operating the opening of the product preparation device (12), preferentially by control means (15) of the apparatus (10) .

The process according to the invention can include a cycle of distribution of single portions (2) of an edible substance to consumption locations (C) that can include:
- transporting a first type of cartridge (1) with a plurality of single portions (2), from a supply location to a consumption location (C);
- operating the single portions (2) in an apparatus (10) at the consumption location (C);
- optionally, transporting said empty cartridge (1) to a supply location so that can be reloaded with single portions (2);
whereby the operation of the single portions (2) can include at least one of:
- placing a first type of cartridge (1) in operative position on a discharge disposition (11) of a product preparation apparatus (10)
- communicating to a supply location, for example wirelessly, operation data associated with the cartridge (1).

Moreover, the process can include a cycle of distribution of single portions (2) of an edible substance to consumption locations (C) that can include:
- transporting a second type of cartridge (1') from a supply location to a consumption location (C);
- opening an exterior package (3A) so as to withdraw an interior package (3B) containing one alignment of single portions (2);
- optionally, removing the alignment of single portions (2) from the interior package (3B);
- disposing an alignment of single portions (2) in operative position on an apparatus s(10), for example inside of a collection part (110) and/or along a support part (111) associated with a discharge disposition (11) of the apparatus (10);
- operating the single portions (2) in an apparatus (10) at the consumption location (C);
and further includes one of:
- sending the exterior package (3A) back to a supply location and the interior package (3B) to a disposal of biodegradable waste;
- sending at least one of: the exterior package (3A) and the interior package (3B) to a disposal of biodegradable waste.

The operation of at least one type of apparatus (10) further include the step of actuating the circulation of pressurized flow through the product preparation device (12) in a closed position and devoid of single portion (2), so as to wash residues of edible substance or associated with the preparation of edible product, whereby said step can be carried out automatically after removal of a cartridge (1) or opening of a closing part (110) associated with a discharge disposition (11) .

As represented in **Figure 23****,** the collection part (110) is initially maintained with the opening oriented upwards, so as to retain the single portions (2).

After placing the single portions (2) and still with the opening of collection part (110) oriented upwards, the user can then apply the connection disposition (8) retaining the latter in the collection part (110) while still oriented upwards. The connection disposition (8) includes a retention part (72) that is impinged by elastic means (not represented) to a retention position, so that can retain the single portions (2) inside the collection part (110).

The actuation part (71) of the retention means (7; 71, 72) is associated with a support part (111) of the discharge disposition (11), and advantageously provided in data connection with control means (15) of the apparatus (10) that can also regulate the opening and closing of the product preparation device (12).

In a following instant, represented in **Figure 24****,** the user can handle the system so as to retain the connection disposition (8) on the support part (111) of the discharge disposition (11). When the collection part (110) is retained in a correct operative position, then the retention part (72) results functionally connected to the actuation part (71) so that can be operated by the latter and regulated by the control means (15).

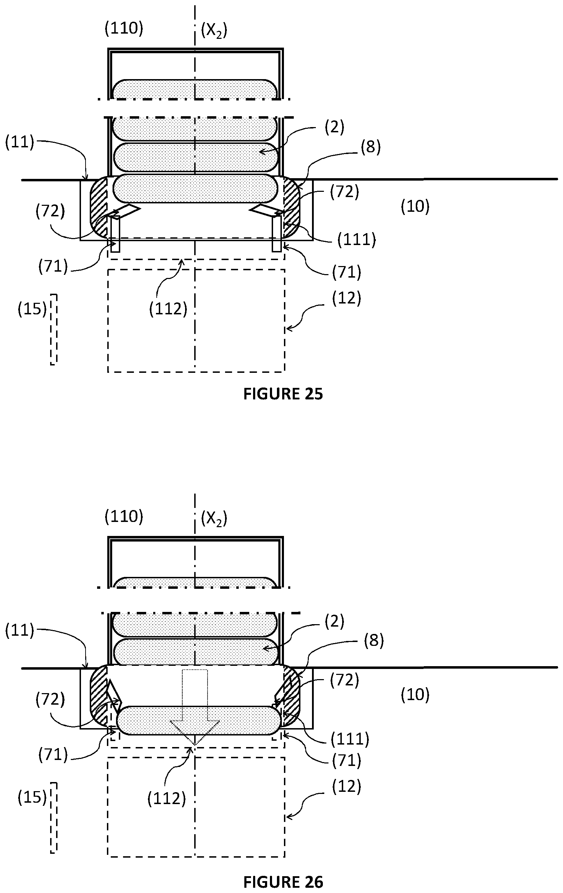

The operation unfolds thereafter in similar manner to the one already described above, and as represented in **Figures 25** and **26****.**

After delivery of single portions (2), the user can remove the collection part (110) together with the connection disposition (8) of the support part (111), and then remove the connection disposition (8) from the collection part (110), so that can start a new cycle with the delivery of a second alignment of single portions (2) to the collection part (110) followed by the application of the connection disposition (8).

According to one aspect, the connection disposition (8) can be configured as a piece that can be removably retained on one of:
- on a base portion of the cartridge (1, 1'), preferentially on the closing part (32) of the package (3), and on a portion of the discharge disposition (11);
- on a portion of the collection part (110) or of support (111) of the discharge disposition (11);
whereby the connection disposition (8) is configured so that it is necessary a correct retention thereof in operative position upstream of the discharge passageway (112) so as to provide the delivery of single portions (2) through it.

According to another aspect, the connection disposition (8) can present a retention part (72) disposed on a perimeter zone that confines a respective discharge passageway, and adapted so that can retain a single portion (2) furthest upstream of an alignment when the connection disposition (8) is operatively retained on the opening region of an exit passageway of a package (3) of cartridge, and that can be actuated by an actuation part (71) when the connection disposition (8) is operatively retained on the discharge disposition (11).

In the case of an embodiment, the connection disposition (8) can present an actuation part (71) and a retention part (72) and be adapted so that can be provided in functional connection with control means (15) when retained in operative position, and thereby be operated based upon input provided by the control means (15).

Moreover, in the case of another embodiment, the connection disposition (8) can present a generally tubular shape that can be hand manipulated and with upstream and downstream sides presenting passageways for single portion (2), and adapted so that can be removably operatively retained by means of at least one of the following types of retention: by means of pressured fitting and by positive connection fitting, including screw type connection, bayonet type connection or similar.

The connection disposition (8) can present a generally tubular shape with upstream and downstream sides presenting passage opening for single portion (2), whereby the type of retention on the upstream-oriented side is different from the type of retention on the downstream-oriented side, and whereby the connection disposition (8) is preferentially adapted so that provides sealing of the interior passage to gases when correctly retained in operative position.

## Claims

1. System for distributing and preparing edible products, for example a beverage, and comprising:
- at least one type of cartridge (1, 1') comprising a package (3) that confines with gas barrier a plurality of single portions (2) of aromatic edible substance, for example roast and ground coffee beans, devoid of respective single packages,
- at least one type of product preparation apparatus (10, 10') comprising a discharge disposition (11, 11') and a product preparation device (12), for example an extraction device, adapted so that can collect and operate a single portion (2),
whereby the discharge disposition (11, 11') presents a discharge passageway (112) adapted for passage of single portions (2), preferentially in at least approximately a previously determined relative position of its central symmetry axis (X₂), and
whereby a plurality of single portions (2) can be disposed along a previously defined alignment including a furthest downstream single portion (2) in a discharge position upstream of the discharge passageway (112),
whereby the system is adapted so that can regulate the delivery of single portions (2) one-by-one to the product preparation device (12), preferentially by control means (15) of the apparatus (10),
**characterized**
**in that** the system is adapted so that can operate the delivery of single portions (2) by retention by means of actionable contact with part of the surface of edible substance of the furthest downstream single portion (2), whereby the contact retention is operable in articulation with the operation of the product preparation device (12).

2. System according to claim 1, **characterized**
**in that** the system is adapted so that can operate a retention of single portions (2) by means of contact only with a portion of the downstream-oriented surface of the single portion (2) furthest downstream in an alignment, preferentially only with a plurality of angular portions of said portion, and/or by means of contact only with part of a perimeter region of the lateral surface of said single portion (2) furthest downstream in an alignment, preferentially only with a plurality of angular portions of said region, and
**in that** the single portions (2) are disposed in operative position upstream of the discharge passageway (112) in a similar alignment of respective central symmetry axis (X₂), including in an alignment extending inside of the package (3) and of the discharge disposition (11), whereby the discharge disposition (11) preferentially presents a collection part (110) and a support part (111) associated with one respective alignment of single portions (2).

3. System according to claims 1 or 2, **characterized**
**in that** the system is adapted so that can retain the single portion (2) furthest downstream in an alignment by means of a plurality, preferentially up to 4, more preferentially up to 3, of actionable angular retention portions provided in contact with a perimeter region of edible substance of said single portion (2), whereby said angular portions preferentially extend in a total extension that is smaller than 70%, preferentially smaller than 50%, particularly preferentially smaller than 30% of a respective perimeter extension, and are disposed symmetrically relative to the central symmetry axis (X₂) of said single portion (2).

4. System according to any of claims 1 to 3, **characterized**
**in that** the system is adapted so that can retain the single portion (2) furthest downstream in an alignment by means of a plurality of angular retention portions associated with retention means (7) and configured as elements that extend transversally to a prevailing direction of the single portion (2) exiting from the package (3) and/or entering in the apparatus (10), preferentially in a radial extension smaller than 30%, preferentially smaller than 20% of the characteristic dimension (D₂), for example diameter, particularly preferentially smaller than the height (H₂) of the single portions (2).

5. System according to any of claims 1 to 4, **characterized**
**in that** the system is adapted so that the control means (15) can regulate the delivery of single portions (2) one-by-one based upon a respective input, for example a start input of the cycle of preparation of edible product, and according to at least one of:
- a previously defined movement and timing of movement of retention means (7), and
- an input from a sensor of detection of single portion (2), preferentially disposed in the vicinity upstream and/or downstream of retention means (7) thereof,
whereby the regulation of delivery can comprise an actuation mode that includes a movement in a first direction and from a first to second position, and in the reverse direction back to the first position, and whereby it is preferred when the regulation of delivery only includes an initial input.

6. System according to any of claims 1 to 5, **characterized**
**in that** the system comprises retention means (7) actionable so that can regulate the passage of single portions (2) one-by-one through the discharge passageway (112), and thereby the delivery thereof to the product preparation device (12), preferentially only by action of the gravity force,
whereby the retention means (7) are preferentially adapted so that can be actuated by a force according to one of:
- only from a retention position to a non-retention position;
- from a retention position to a non-retention position and back,
and
whereby the retention means (7) are preferentially adapted so that can be actuated between two positions, including along one of: a linear extension smaller than %, preferentially smaller than 20% of the characteristic dimension (D₂) of single portion (2), and an angular extension smaller than 90°, preferentially smaller than 45°, more preferentially smaller than 33°.

7. System according to any of claims 1 to 6, **characterized**
**in that** the system comprises retention means (7) that include a retention part (72) and an actuation part (71) adapted so that can exert a mechanic force and thereby drive the retention part (72) between a retention position where the latter contacts with edible substance of single portion (2), and a non-retention position where enables the circulation thereof through the discharge position (112), whereby the retention means (7; 71, 72) are disposed above the discharge passageway (112) and adapted so that can be actuated in articulation with actuation means of the product preparation device (12), whereby at least the actuation thereof is preferentially non-manual and regulated by control means (15), and
**in that** the system comprises retention means (7) that include a retention part (72) adapted so that can be moved along at least one of: a linear movement, and a swivelling movement, whereby the retention part (72) is preferentially provided so that can carry out a movement along an extension smaller than the height (H₂) of the single portion (2).

8. System according to any of claims 1 to 7, **characterized**
**in that** the system comprises retention means (7) where an actuation part (71) is provided stationary and adapted so that can carry out a linear movement, frontwards and backwards, including along a direction parallel or orthogonal relative to the axis of discharge passageway (112), and thereby actuate a movement of the retention part (72), preferentially a swivelling movement, including in a plane orthogonal or parallel to the plane defined by the cross section of the discharge passageway (112), at least along a direction between first and second position of the retention part (72), and
**in that** the system comprises retention means (7) where a retention part (72) is impinged to a retention position by means of at least one of: an elastic force and the gravity force, and so that can be impinged by an actuation part (71) to a non-retention position and so that can return to the retention position by means of ceasing the mechanic force and action of at least one of: an elastic force and the gravity force.

9. System according to any of claims 1 to 8, **characterized**
**in that** the system comprises retention means (7; 71, 72) arranged according to one of:
- actuation (71) and retention parts (72) associated with the discharge disposition (11) and adapted so that can operate when the latter is in operative position, so that can retain a single portion (2) in the collection part (110) and/or in the support part (111) thereof;
- actuation part (71) associated with the discharge disposition (11) and retention part (72) disposed in the base region of the package (3) of cartridge (1), preferentially in a closing part (32) thereof, and adapted so that the actuation part (71) can actuate the retention part (72) when the cartridge (1) is retained in operative position in the discharge disposition (11);
whereby the actuation part (71) can be provided in functional connection with control means (15) of the apparatus (10), and preferentially further with data apprehension means (14) associated with the discharge disposition (11), and whereby the retention part (71) only can be impinged by the actuation part (72) in case of a correct operative position of the alignment of single portions (2) in the discharge disposition (11) .

10. System according to any of claims 1 to 9, **characterized**
**in that** the system comprises retention means (7) comprising retention part (72) that includes elastic means adapted so that can elastically impinge towards a first position, in particular a position that prevents passage of single portions (2), and comprising actuation means (71) adapted so that can impinge the retention means (72) against the elastic force exerted by the elastic means, whereby a portion of the actuation means (71) is adapted so that can impinge a portion of retention means (72) and thereby induce transmission of movement to the latter.

11. System according to any of claims 1 to 10, **characterized**
**in that** the system comprises retention means (7) arranged between an exit passageway of package (3) of cartridge (1) and the discharge passageway (112), or
**in that** the system comprises retention means (7) disposed inside a discharge disposition (11), including inside a collection part (110), and upstream of the discharge passageway (112) thereof,
whereby the system is preferentially configured so that the single portions (2) can exit the cartridge (1) and not touch other surfaces besides the retention means (7) until the product preparation device (12).

12. System according to any of claims 1 to 11, **characterized**
**in that** the system comprises a connection disposition (8) configured as a piece that confines a passageway for single portions (2) that can be upstream of the discharge passageway (112) and that presents at least the retention part (72) of the retention means (7; 71, 72), so that can provide retention of the furthest downstream single portion (2), and connection of passage of single portions (2) between the exit passageway of cartridge (1, 1') and the discharge passageway (112) that provides access to the interior of the apparatus (10) upstream of the product preparation device (12).

13. Process for operation of a system of distribution and preparation of edible products, **characterized**
**in that** includes at least one cycle of preparation of edible product, for example a beverage, whereby single portions (2) devoid of individual packages are operated in an apparatus (10) of preparation of edible product, and that comprises the steps:
- manipulating a plurality of single portions (2) in an operative position where they are impinged by a force along a previously defined alignment relative to a discharge disposition (11) and operatively retained upstream of a discharge passageway (112) thereof;
- optionally, confirming that the product preparation device (12) is in an open position;
- operating retention means (7) so as to move a retention part (72) in contact with edible substance of the furthest downstream single portion (2) in the alignment, from a position of retention to a position of non-retention, and thereby enabling the delivery of said single portion (2) to the product preparation device (12);
- operating the closure of the product preparation device (12) .

14. Process according to claim 13, **characterized in that** the operation of the retention means (7) includes at least one of:
- impinging a retention part (72) with a mechanic force exerted by an actuation part (71) against the action of at least one of: elastic force and gravity force;
- inducing a swivelling movement by the retention part (72) between a position of retention and a position of non-retention of single portion (2) in an angular extension smaller than 90°;
- ceasing the application of mechanic force so that the retention part (72) automatically returns to a retention position;
- monitoring the previously defined movement path of the actuation part (71) until a position of non-retention, including at least one of: extension and duration of this movement pathway;
- optionally, detecting the passage of the single portion (2) downstream of the retention part (72).

15. Process according to claims 13 or 14, **characterized in that** the handling of a plurality of single portions (2) includes at least one of:
- operatively retaining a connection disposition (8) in an exit opening of package (3) of cartridge (1), so that a retention part (72) can retain the single portions (2);
- operatively retaining a connection disposition (8) in the discharge disposition (11) so that the retention means (7) result functionally operable;
or
- removing an alignment of single portions (2) from a package (3) and disposing said alignment in a collection part (110) and/or in a support part (111);
- retaining a connection disposition (8) in an opening of collection part (110), for example in the opening of the discharge passageway (112), so that a retention part (72) can retain the single portions (2).
